Europäisches Patentamt

(19) European Patent Office

Office européen des brevets

(11) Publication number: **0 052 159**
**A1**

(12) # EUROPEAN PATENT APPLICATION

(21) Application number: 80107115.0

(22) Date of filing: 17.11.80

(51) Int. Cl.³: **G 03 B 41/18**

(43) Date of publication of application:
26.05.82 Bulletin 82/21

(84) Designated Contracting States:
CH DE FR GB IT LI

(71) Applicant: HALLENWAG AG
Städtle 36
FL-9490 Vaduz(LI)

(72) Inventor: Parma, Franco
Via Gramsci, 127
IT-40013 Castelmaggiore(IT)

(74) Representative: Modiano, Guido et al,
MODIANO & ASSOCIATI S.A.S. Via Meravigli, 16
I-20123 Milan(IT)

(54) **Apparatus for automatically loading and unloading radiographic plate boxes and for feeding automatic developing machines.**

(57) An apparatus for automatically developing radiographic plates comprises a frame (1) encompassing a dark compartment, a plurality of driving rollers (9) for transferring into the compartment a container of a radiographic plate to be developed, an assembly for opening the container and inserting the plate into a developing machine (42), and a fresh-plate locating bar (52) provided with a plurality of suckers (53) effective to grip a fresh radiographic plate and insert it into the container. Thus the entire radiographic plate developing process, including the replacement of the exposed plate with a fresh one inside the plate container, can be carried out in a fully automated manner.

Croydon Printing Company Ltd.

Fig. 1

This invention relates to an apparatus for automatically loading and unloading boxes intended to contain radiographic plates, and for feeding automatic developing machines.

Known are, in the radiographic diagnostics field, machines for automatically developing X-ray plates. Such plates are usually contained in suitable metal boxes which, when the plate is to be taken out of them and inserted in the developer, must be opened in a dark room. Obviously, the subsequent placing of a fresh plate into the box also requires the availability of a dark room. Such operations are time-consuming, in spite of the fast action required sometimes in carrying out X-ray examinations, and notwithstanding the general trend toward increasing automation of procedures.

This invention sets out to provide an apparatus which is capable of carrying out in a fully automated manner the entire radiographic plate developing process, including replacement of the exposed plate with a fresh one inside the plate containing box.

Within that general aim, it is possible to arrange that this apparatus for automatically developing radiographic plates is reliable in operation, versatile in use, even in connection with the different size of the plates utilized in diagnostics, as well as simple in design and easy to manufacture, thereby its production is made in all senses advantageous.

According to one aspect of this invention, there is provided an apparatus for automatedly developing radiographic plates, characterized in that it comprises a frame defining a dark room compartment, means for transferring into said compartment one container of a plate to be developed, means for opening said container, means for picking up said plate from said container and inserting said plate into a developing machine, and means for picking up from a **magazine** a fresh plate and inserting said fresh plate into said container.

Further details of this invention will be more clearly understood from the following description of a preferred embodiment of this apparatus for the automated development of radiographic plates, with reference to the accompanying drawings, where:

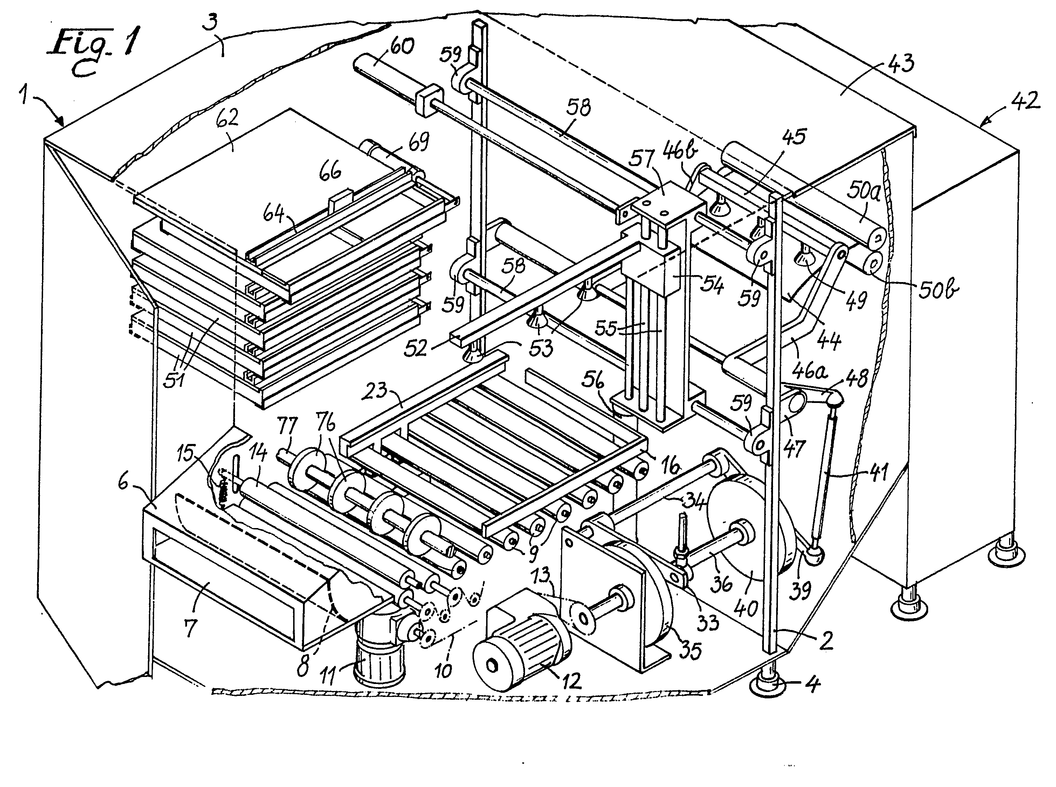

Figure 1 shows a perspective, partly cut-away and diagramatical, view of this apparatus;

Figure 2 is a perspective view of the means provided for opening the plate container;

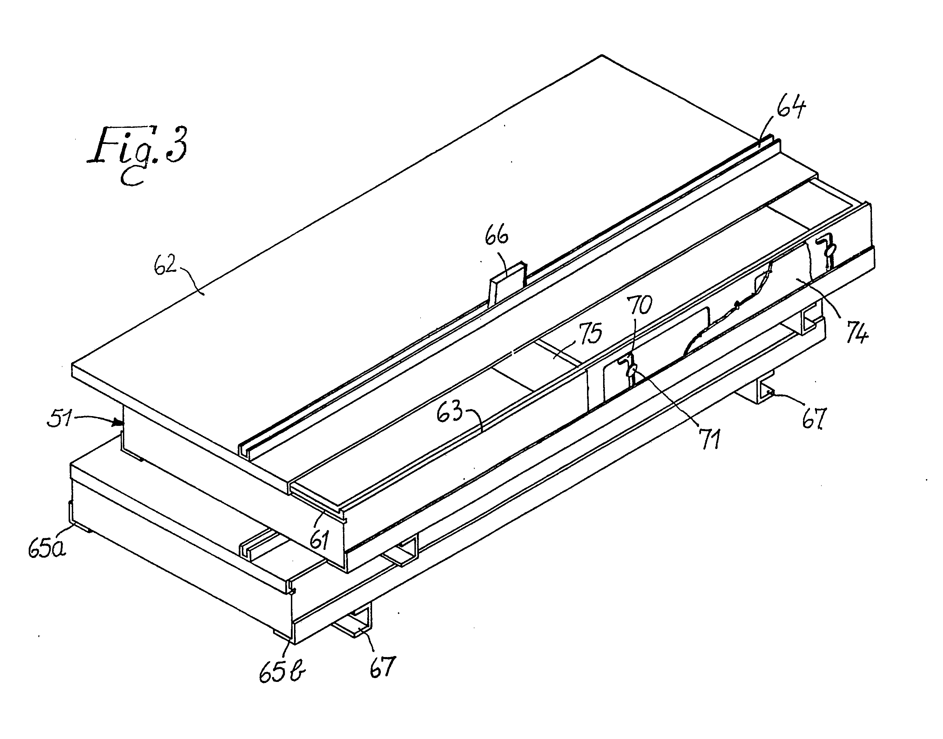

Figures 3 and 4 are a perspective view of the magazine and a partly sectional elevation view of a drawer;

Figures 5,6 and 7 show in perspective, elevation, and plan views, a modified embodiment; and

Figure 8 shows a different embodiment of the means for opening the plate container.

With reference to the drawing figures, there is generally indicated at 1 an apparatus frame having a substantially parallelepipedal shape and comprising uprights 2 whereto side panels 3 are attached, part of said panels being openable for access to the apparatus member. The frame 1, supported on suitable feet 4, defines a dark room compartment wherein a box-like container 5 containing a radiographic plate can be opened. On a front side of the frame 1, there is provided an inlet 6 having a horizontal opening 7 for introducing the container 5 with the plate to be developed into said dark room compartment. The opening 7 is closed by a rubber curtain 8, located on the inside of the inlet 6, said curtain being suitably framed to prevent infiltration of light to the dark room inside.

Within the frame 1, there are arranged, adjacent the inlet 6, a multiplicity of horizontal and parallel rollers 9 forming a conveyor deck or surface for the container 5, located at a substantially middle portion of the frame. The rollers 9 are driven rotatively, through a drive chain 10, by a motor member 11. A second motor member 12 is accommodated in the lower portion of the frame 1 for driving, through a drive 13, the remaining movable members of the machine.

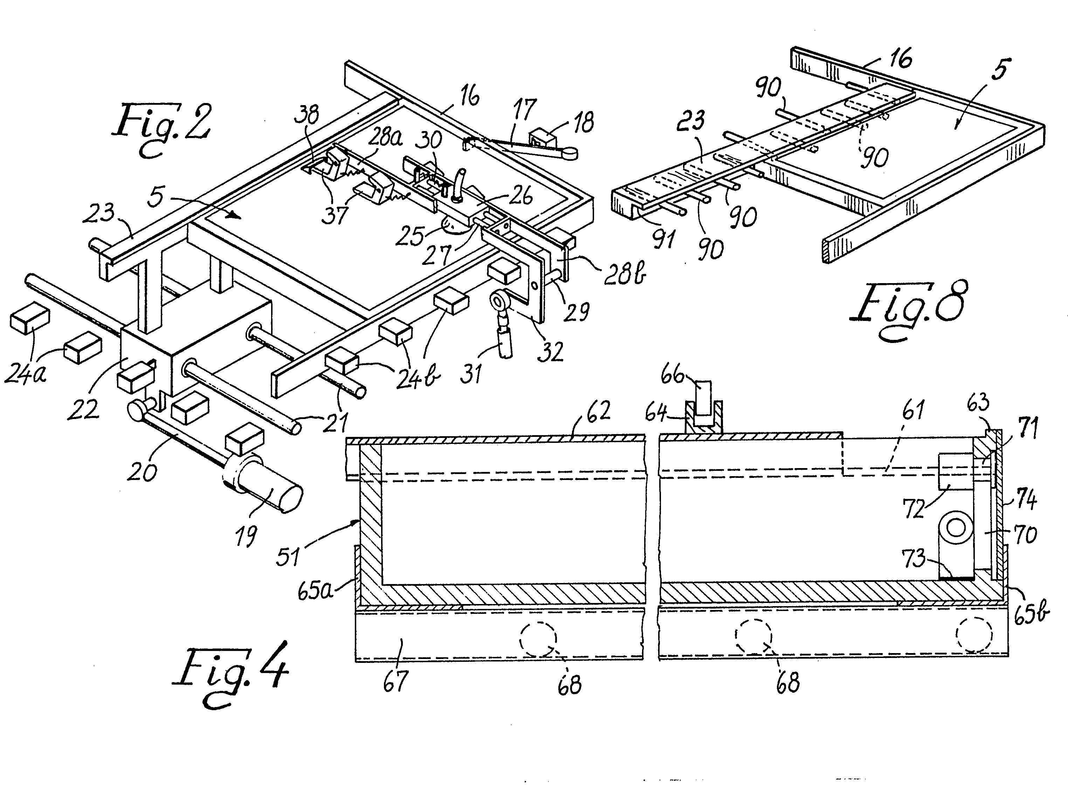

Above the plane of said rollers 9, there is provided an idle roller 14 in tangential relationship at the bottom with the other along a generatrix
under the bias of suitable spring means 15 wherefrom
it is suspended. At the end of the conveyor deck
comprising the rollers 9, there are provided means
for determining or sensing the size of the container 5
introduced into the apparatus, which means are
shown more clearly in Figure 2. Said means
comprise a square 16 coplanar with the conveyor
deck, against one side whereof the container 5
abuts in sliding on the rollers 9. That abutment
action causes a small lever arm 17 to be displaced
which actuates a first microswitch 18, which in
turn controls the actuation of a first pneumatic
cylinder 19. The rod 20 of said pneumatic cylinder
19 causes a block 22 to slide on guides 21, a
horizontal strip 23 coplanar with the square 16
along the direction of advance of the container 5
being rigid with said block. The strip 23 urges
the container 5 to contact the second side of the
square 16. Thus, a dual set of microswitches 24a,b
are actuated, which are aligned along two
orthogonal directions of the square 16, and thus
determine the size of the container.

At that position, after completing its
sliding travel on the rollers 9, the container 5
is located at means adapted for opening it, such
that the plate can be withdrawn therefrom. Said
container opening means comprise a pneumatic
sucker 25 mounted on a support or holder 26 which is arranged to slide on guides 27 secured longitudinally between a pair of arms 28a,b which are pivoted with one end to a pivot pin 29. A return spring 30 acts on the holder 26 for the sucker 25 longitudinally to said guides 27. The pivotal movement of the arms 28a,b in a vertical plane about the pivot pin 29 is obtained by means of a vertical rod 31, which is linked with its top or upper end to a U-bent portion 32 of the arm 28a. With its lower or bottom end, the rod 31 is linked to a corresponding end of an arm 33 pivoted, at its other end, to a horizontal shaft 34 and engaging centrally a cam 35, which being keyed to a second shaft 36 parallel to the former and rotatively driven by the motor 12, is operative to produce a substantially axial oscillatory reciprocation of the rod 31.

Laterally to the arm 28a, there are pivoted a plurality of catches 37 adapted to alternately engage, in accordance with the size of the container 5, a tripping pushbutton 38 provided on the container for the opening thereof.

To the shaft 34, there is also pivoted a second arm 39 engaging centrally a second cam 40 mounted on the shaft 36 and being linked with its free end to a second vertical rod 41, which it also reciprocates. Said second rod 41 is operative to actuate means for picking up the plate from the container 5 and inserting it into a conventional developer, which will not be described herein. That developer, as indicated at 42, is rigidly coupled to the dark room compartment of said frame 1 through a suitable connective structure, which structure includes a top hatch 43 for direct access to the developer 42 in emergency situations.

Said plate pick up means, as indicated at 44 in the drawings, comprise a yoke member comprising a horizontal cross-member 45 mounted between a pair of sectional elements 46a,b which are pivoted to bushings 47 attached to respective uprights 2 of the frame 1, such as to be pivotable in a vertical plane in the direction of advance of the plate on the rollers 9. Rigid with the sectional element 46a is a small arm 48 linked to the top or upper end of said second rod 41 which rotates said yoke. The cross-member 45 carries a plurality of suckers 49 effective to grip the plate 44 for **transporting said plate** to a pair of counterotating rollers 50a,b of the developer 42.

Within the frame 1, there are further accommodated a plurality of drawer containers 51, which being stacked alongside the rollers 9, constitute the magazine containing unexposed plates.

To pick up a fresh plate from its related drawer in said magazine, and inserting it into the container 5, there is provided a device comprising a horizontal bar 52 extending crosswise to the rollers 9 and carrying a plurality of suckers 53 adapted for gripping the plate. The bar 52 is made rigid with one end to a block 54 mounted for sliding movement on vertical guides 55, upon actuation of a second air-operated cylinder 56. The vertical guides 55 are attached to a frame 57 which is in turn slidable on a pair of horizontal guides 58 which are mounted, through bushings 59, on uprights 2 of the frame 1, parallel to the rollers 9. The movement of the frame 57 on the guides 58 is effected by means of a third air-operated or pneumatic cylinder 60, thereby the bar 52 is enabled to move either in the vertical or horizontal direction.

The drawers 51 have a box-like configuration and standardized dimensions matching, of course, the largest size plates they are to contain. Each drawer 51 has on opposite sides, externally thereto, grooves 61 adapted for guiding a respective sliding cover 62 which abuts, in its closed condition, against a raised sideboard 63 on the front of the drawer, for light imperviousness. On the top face, the cover 62 of the drawer 51 is provided with a recessed grooved sectional member 64 having a "U" cross-section and extending orthogonally to the direction of insertion of the cover over the drawer. The drawer 51, as filled with unexposed plates, is introduced into the frame 1 through a removable panel 3a located on one side of the inlet 6, and is placed onto a pair of opposite angle members 65a,b arranged to lay parallel to the direction of advance of the containers 5.

At the same time, the groove of the insert 64 on the cover 62 engages a fixed tab 66 of the frame. The angle members 65a,b carry at the bottom and transversely additional sectional members 67, by means of which they are mounted slidably, in a known manner, between pairs of idler wheels 68, thereby the drawers 51, once they have been mounted on the angle members 65a,b, are slidable in an orthogonal direction to that of advance of the containers 5. That sliding movement is produced by additional pneumatic cylinders 69 the rods whereof are rigid with the members.

The drawers 51 have on their front sides a pair of vertical slots 70 wherein there engage respective throughgoing screws 71 with which is rigid, on the inside of the drawer, a small horizontal bar 72 adapted for marginally resting on the plates contained in the drawer. At said bar, on the drawer bottom, there is mounted a metal foil 73 adapted for closing a suitable electric circuit with the bar itself, to monitor the emptying of the drawer. To the front wall of the drawer 51, there is attached a sheet strip 74 to prevent the infiltration of light through the slots 70.

The drawers intended for containing plates with a smaller size than the maximum size, are further provided with a vertical diaphragm 75 which borders their useful space.

Above the rollers 9, lastly, there are provided means for closing the container 5, which comprise a plurality of wheels 76 mounted on an axle 77 parallel to the rollers.

The apparatus described hereinabove operates as follows.

The container 5 containing the exposed plate is introduced through the opening 7 of the inlet 6 and advanced on the rollers 9 until it contacts the transverse side of the square 16, to also trip the microswitch 18. Then, the first pneumatic cylinder 19 is actuated which, through the cross-member 23, brings the container 5 to also contact the longitudinal side of the square 16. Once the container 5 has been blocked, it is opened by the arms 28a,b pivoting, under the action of the rod 31, to bring the sucker 25 to grip the container cover, while at the same time the suitable catch 37 trips the pushbutton 38 and releases the cover. A reverse rotation of the arms 28a,b causes the container to be opened. The second rod 41 then moves up to rotate the cross-member 45, until the sucker 49 is brought to grip the plate 44 contained in the container 5. Suitable connections are, of course, provided for applying a vacuum to either this or the other suckers. With the cross-member 45 moving successively in the opposite direction, the plate 44 is lifted up and introduced in the nip of the counter-rotating rollers 50a,b of the developer 42, which develops it in a known manner. Then, a fresh plate is loaded into the container 5, the size whereof has been detected by the dual set of microswitches 24a,b. A related pneumatic cylinder 69 thus opens the drawer 51 which corresponds to that size, and causes the sectional members 67 to slide, whereon the drawer is mounted, on the wheels 68, while the cover 62 remains locked owing to its insert 64 engaging the tab 66.

The picking up of a fresh plate and the introduction thereof into the open container 5 are effected through the suckers 53 mounted on the bar 52, the translation whereof is effected in either the vertical or horizontal directions by pneumatic cylinders 56 and 60.

It should be noted that the presence of the bar 72, acting on the edges of the plates, causes a plate to flex while being picked up, thus facilitating its separation from the underlying plates.

After a fresh plate has been inserted into the container, the releasing of the sucker 25 causes the cover of the container to be dropped. Reverse actuation of the rollers 9 brings the container 5 back toward the inlet 6. The container is tripped closed while still inside the dark room compartment, as it moves past under the wheels 76.

The emptying of one of the drawers 51 is monitored by the contact of the bar 72 closing onto the foil 73. With the apparatus stopped, it is then possible to withdraw the drawer from the angle members 55a,b which support it, for loading it with a fresh charge of plates.

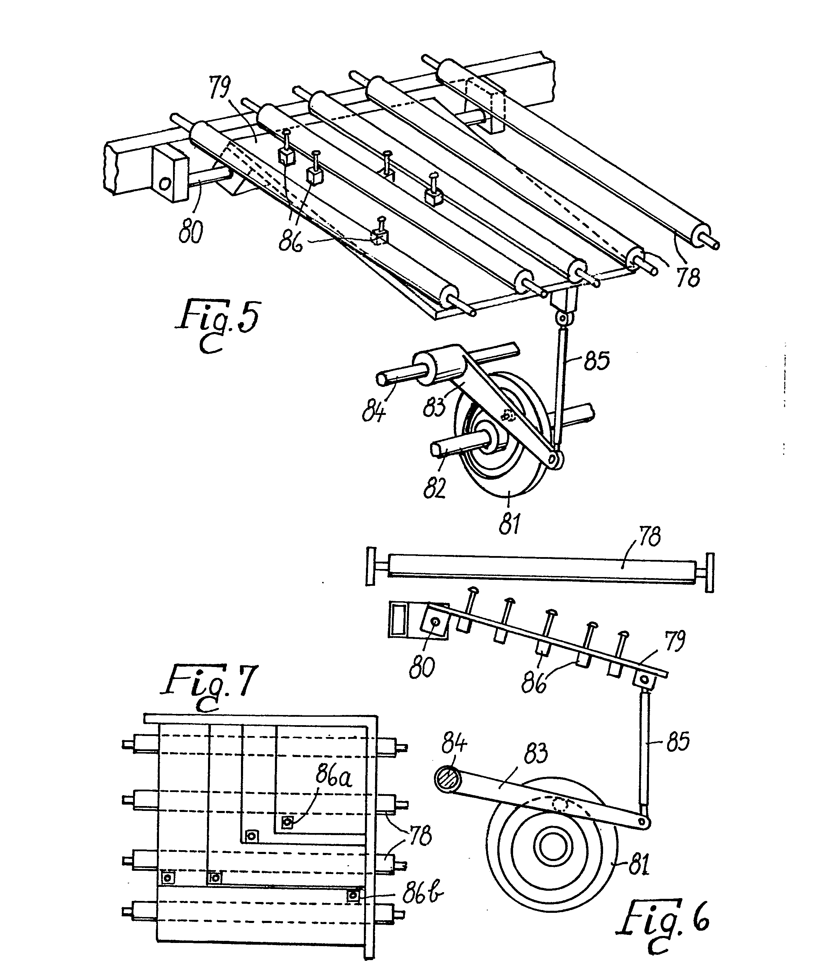

In practicing the invention, its technical details may be modified to suit individual requirements. Thus, for example, the means for detecting the size or dimensions of the containers may be constructed as shown in Figures 5-7.

In the cited figures, there are indicated at 78 the rollers which form the container feeding deck or surface. Below the rollers 78, there is arranged a bracket 79 hinged for oscillation to the frame, by means of a pivot pin 80. The oscillation plane of the bracket 79 extends cross-wise to the container direction of advance.

The operation of the bracket 79 is controlled by a cam 81, mounted radially on a driveshaft 82, which can engage a roller cantilevered from an arm 83 pivoted to a shaft 84 parallel to the shaft 82.

The free end of the arm 83 is swivel connected through a tie rod 85 to the end of the bracket 79.. At a suitable position on the bracket 79, there are arranged a plurality of switches 86 which are adapted, as the bracket is being raised and lowered, to move to a position overlying the top tangency plane of the rollers 78 from a position underlying said plane. As shown best in Figure 7, the microswitches are arranged such that they are enabled each to detect a size of the oncoming containers after the latter have been abutted against the square 87. Thus, for example, the microswitch 86a is operative to detect the smallest size, whereas the microswitch 86b can be made to detect the largest size. In practice, each microswitch will act on that area of the container which protrudes beyond the periphery of the next smaller one. The microswitches 86 (see Figure 6) have actuating toggles of such a size that they can contact the bottoms of the containers through the gaps between adjacent rollers. It should be noted that the positioning of the containers against the square 87 may be obtained, additionally to the combined action of the feeding rollers and a side pusher, such as the one indicated at 23, also by arranging the rollers 78 suitably inclined on the feeding direction. In fact, in this way, a transverse motion component is obtained which causes a side displacement of the containers and their abutting against the longitudinal and transverse sides of the square 87.

The solution shown in Figures 5-7 has the peculiarity, over the preceding one, of greatly reducing the number of microswitches required. Moreover, a considerable simplification is achieved when the need arises for modifying the positions of the microswitches to suit boxes of a different size from the one initially anticipated.

With particular reference to Figure 8, there is shown a different embodiment of the means for opening the container; according to this embodiment, the strip 23, which urges the container 5 against the second side of the square 16, is provided with a plurality of small pegs 90, spaced apart from one another, which extend perpendicularly to the strip 23., on the side next to the container 5.

At least one of the pegs 90 can be inserted: through side holes provided on the side of the container 5 located at the opening pushbutton, thereby it can actuate directly the pushbutton itself. The pegs 90 which are not in alignment with a hole, being carried elastically by the strip 23, are allowed to slide back inside the strip without obstructing its travel movement.

It should be added that the strip 23 may be provided with a longitudinal edge 91 which protects the pegs 90 during the phase of introduction and withdrawal of the container 5..

In practicing the invention, the shapes and dimensions may vary according to individual requirements..

## CLAIMS

1. An apparatus for automatically developing radiographic plates, characterized in that it comprise a frame (1) defining a dark room compartment, means (9) for transferring into said compartment one container (5) of a plate to be developed, means for opening said container, means for picking up said plate from said container (5) and inserting said plate into a developing machine, and means for picking up from a magazine a fresh plate and inserting said fresh plate into said container.

2. An apparatus according to Claim 1, characterized in that said means for transferring said container comprise a plurality of horizontal and parallel rollers (9), motor members (10,11) being provided for the driving thereof.

3. An apparatus according to Claim 1, characterized in that said means for opening said container comprise a sucker (25) mounted on a lever arm (28a,28b), means (31) being provided for actuating said arm.

4. An apparatus according to Claim 3, characterized in that said arm (28a,28b) carries at least one catch (37) adapted for acting on a tripping pushbutton (38) of said container (5).

5. An apparatus according to Claim 1, characterized in that said means for picking up the plates comprise at least one sucker (49) mounted on oscillating means interposed between said container transferring means and said developing machine, for transferring a plate from the former into the latter.

6. An apparatus according to Claim 1, characterized in that said means for picking up a plate from said magazine comprise at least one sucker (49) mounted on horizontally and vertically guided support means, pneumatic members being provided for displacing said means in either directions.

7. An apparatus according to Claim 1, characterized in that said magazine comprises a plurality of drawers (51) arranged in stacked relationship alongside said container transferring means and slidably carried with respect to said frame (1).

8. An apparatus according to Claim 7, characterized in that said drawers (51) are provided with a respective cover (62) guided slidably thereon and having means of engagement with a respective fixed element of said frame (1).

9. An apparatus according to Claim 7, characterized in that said drawers (51) have internally a movable element (72) resting on the plates contained therein and adapted to close a suitable electric contact (73) placed at the bottom of said drawer (51) for monitoring the emptying thereof.

10. An apparatus according to Claim 1, characterized in that it comprises means for detecting the dimensions of said container, said means comprising a plurality of sensors (24a,24b) located at a square (16) abutting said container (5).

11. An apparatus according to Claim 1, characterized in that it comprises cam means driven by suitable motor means and operative to actuate said opening means of said container (5) and said means for picking up a plate from said container.

12. An apparatus according to Claim 1, characterized in that it comprises means for closing said container, said means including idler wheel members (76) located above said container transferring means.

13. An apparatus according to one or more of the preceding claims, characterized in that said means for opening said container (5) comprise a plurality of pegs (90) slidably carried by said strip (23), at least one of said pegs being inserted through at least one hole provided on the side edge of said container (5) at said opening pushbutton.

14. An apparatus according to one or more of the preceding claims, characterized in that said means for detecting the dimensions of said container comprise a plurality of switches (86) supported by a bracket (79) hinged for oscillation to said frame, to removably bring at least part of said switches (86) to contact said container (5) as carried by said rollers (9).

Fig. 1

Fig.2

38 28a 30
16 17 18
23
5 26
37 27
25
28b
29
24a 24b 31 32
22
21
20
19 51

Fig.8

23 90 16 5
90
91 90 90

Fig.4

66
62 64 61 63
71
72 74
70
73
51
65a 65b
67 68 68

2/4

0052159

Fig.3

0052159

Fig.5

Fig.7

Fig.6

0052159

## European Patent Office

## EUROPEAN SEARCH REPORT

Application number

EP 80107115.0

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| | AT - B - 359 171 (CESARE)<br>+ Fig. 1; page 3, lines 1-4; page 6,claim +<br>& US-A-4 049 142 & GB-A-1 536 198<br>-- | 1-3,5, 7-11,14 | G 03 B 41/18 |
| | US - A - 3 857 040 (ZWETTLER)<br>+ Fig. 1; column 1, lines 27-34; column 3, lines 25-44; column 7, lines 5-6; column 8, lines 35-36; column 12, lines 14-20 +<br>-- | 1,2 | |
| | GB - A - 1 363 141 (KODAK)<br>+ Page 2, lines 70-90; page 3, lines 9-21; fig. 1,2 +<br>-- | 1,10,12 | TECHNICAL FIELDS SEARCHED (Int. Cl.³)<br><br>G 03 B 41/00<br>B 65 H 1/00 |
| | US - A - 3 083 869 (CRUMRINE)<br>+ Column 4; lines 40-59; fig. 3 +<br>-- | 1,2,7,8 | G 03 G 15/00<br>G 03 D 17/00 |
| | US - A - 3 920 991 (BAKER)<br>+ Column 3, lines 41-53; column 8, lines 19-30; column 16, lines 44-68; column 31, lines 54-62; column 32, lines 1-2; fig. 3-5 +<br>---- | 1,7,8 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| VIENNA | 17-06-1981 | VAKIL |

EPO Form 1503.1 06.78